# EUROPEAN PATENT SPECIFICATION

(11) **EP 0 607 145 B1**
(45) Date of publication and mention of the grant of the patent: **07.01.1998**
(21) Application number: 92905859.2
(22) Date of filing: 07.10.1991
(51) Int. Cl.: G09G 3/34, G02B 26/00, G02F 1/167

(54) **ELECTRODE STRUCTURE FOR AN ELECTROPHORETIC DISPLAY APPARATUS**
ELEKTRODENSTRUKTUR FÜR EINE ELEKTROPHORETISCHE ANZEIGEVORRICHTUNG.
STRUCTURE D'ELECTRODE DESTINEE A UN DISPOSITIF D'AFFICHAGE A ELECTROPHORETIQUE

(43) Date of publication of application: 27.07.1994
(73) Proprietor: COPYTELE INC., Huntington Station New York 11746 (US)
(72) Inventor: DISANTO, Frank, J., North Hills, NY 11030 (US); KRUSOS, Denis, A., Lloyd Harbor, NY 11743 (US)
(74) Representative: Lucking, David John
(86) International application number: US9107161
(87) International publication number: WO9307608

(56) References cited:
- US-A- 3 940 201
- US-A- 4 041 481
- US-A- 4 686 524
- US-A- 4 753 517
- US-A- 5 066 946

## Description

### Technical Field

The present invention relates to a segmented type anode electrode for an electrophoretic display and, in particular, to an anode electrode for use in fabricating a flat panel display such as an electrophoretic display panel.

### Background Art

Electrophoretic displays are known which incorporate a plurality of parallel cathode lines and a plurality of transverse grid lines insulated from the cathode lines. The cathodes and grids are referred to as rows and columns and the terms can be interchanged. The grid cathode structure forms an X-Y matrix enabling one to address the display at each X-Y intersection to enable pigment particles to migrate to the anode electrode. Such electrophoretic displays have been the subject matter of other prior art patents and essentially the assignee herein, namely CopyTele, Inc. of Huntington Station, New York, has developed many such displays as well as operating techniques for such displays.

As is well known to those of ordinary skill in the art, a display is formed in an electrophoretic display panel as a result of movement of electrically charged particles that are suspended in a fluid which is disposed within a panel structure, which panel structure supports the row and column electrodes and the anode electrode structure. The movement of the electrically charged particles is caused by applying potentials to predetermined intersections of the row and column electrodes and to the anode electrode structure to provide predetermined electric fields. As described in U.S. Patent No. 4,655,897, entitled "Electrophoretic Display Panels and Associated Methods", issued on April 7, 1987 and in U.S. Patent No. 4,850,819 entitled "Electrophoretic Display Panel Apparatus and Methods Therefor", issued on July 25, 1989, a typical 8.5" x 11" (1" corresponding to 25.4 mm) electrophoretic display panel having a resolution of 200 lines per inch comprises approximately 2200 cathode or row electrodes, approximately 1700 grid or column electrodes, and an overlying anode electrode structure.

There is an anode electrode structure which comprises conductor strips instead of a solid thin layer of ITO. This anode structure is described in a copending application entitled DUAL ANODE FLAT PANEL ELECTROPHORETIC DISPLAY, filed on May 1, 1989, Serial No. 345,825 to Frank J. DiSanto and Denis A. Krusos and assigned to CopyTele, Inc., the assignee herein, which is now U.S. Patent . In an electrophoretic display panel which is used to display characters, characters are formed utilizing a predetermined number of such anode conductor strips in a group, the predetermined number of anode conductor strips being referred to as a character line and each of the predetermined number of anode conductor strips in the character line being referred to as an anode line segment. For example, in a typical such electrophoretic display panel, a character line is comprised of 26 anode line segments, each of which is approximately .125" wide and each of which is spaced approximately .001" from adjacent segments.

As is well known to those of ordinary skill in the art, an entire electrophoretic display panel which is fabricated in accordance with the prior art described above can be erased by applying a negative voltage to all of the anode line segments in the anode electrode structure. In addition, to provide a "hold" mode of operation or a "write" mode of operation, which modes of operation are described in the U.S. patents identified above, a positive voltage is applied to all the anode line segments in the anode electrode structure. Further in addition, a "selective" erase operation of a multiplicity of character lines, each of which comprises a multiplicity of anode line segments, is achieved by applying a negative voltage to the anode line segments which comprise each of the selected character lines. However, when the above-described "selective" erase operation in such an electrophoretic display panel is utilized to erase a single character line by applying a negative voltage to the anode line segments for the selected character line, a part of adjacent character lines on either side of the selected character line are also erased. Although such partial erasure also occurs when a multiplicity of character lines are erased, partial erasure is particularly unacceptable when few character lines are erased because it produces a display which is illegible and hard to read.

In general, notwithstanding that movement of particles in the electrophoretic display panel is almost perpendicular to the anode and cathode surfaces, some inherent spreading occurs. We have discovered that this inherent spreading causes the above-described erasure of parts of character lines which are adjacent to a character line which is to be erased. Further, we have discovered that such partial erasure of adjacent character lines can be eliminated if the spacing between adjacent anode line segments is increased. However, such a solution is unsatisfactory because the amount of spacing which is required to eliminate the partial erasure is so large that the line structure of the display becomes noticeable to a viewer. The increased spacing also affects resolution as one could not achieve 200 lines per inch without proper line spacing.

As a result of the above, there is a need in the art for an anode electrode structure for a display and, in particular, for an electrophoretic display panel which provides selective erasure of lines without partial erasure of adjacent lines.

Alternative forms of electrophoretic displays incorporating anode electrode structures which comprise conductor strips are described in US Patent No. 4,686,524. One embodiment incorporates two sets of interdigitised electrodes, one set having a greater width than the other set. However, the invention described does not relate to the problem of selective erasure of character lines.

### Disclosure of the Invention

Embodiments of the present invention as defined in the appended claims advantageously solve the above-identified need in the art by providing an anode electrode structure for a display and, in particular, for an electrophoretic display panel which provides selective erasure of a line without partial erasure of adjacent lines.

An embodiment of the present invention is an anode electrode structure which is comprised of a multiplicity of anode line segments wherein each anode line segment comprises at least a first and a second conductor. In a preferred embodiment of the present invention, the first conductor is larger than the second conductor and the inventive anode electrode structure is applied to an electrophoretic display.

One provides a full panel erase operation in an electrophoretic display panel fabricated using an embodiment of the present invention by applying a negative voltage to all anode line segments in the display panel, i.e. to the first and second conductor of each anode line segment. Further, with such a display panel, one provides a "hold" operation or a "write" operation by applying a positive voltage to all anode line segments in the display panel, i.e., to the first and second conductor of each anode line segment. Lastly, with such a display panel, one provides a selective erase operation by applying a negative voltage to a selected group of anode line segments, i.e., to the first and second conductor of each of the selected group of anode line segments, and by applying a positive voltage to all the other anode line segments in the display panel, i.e., to the first and second conductor of each of the other anode line segments.

Advantageously, in accordance with the present invention, the addition of a conductor between anode line segments of an anode electrode structure which is fabricated in accordance with the prior art eliminates partial erasure of lines which are adjacent to a line which is being erased. Further, as will be set forth in detail below, the additional conductor can be made sufficiently small that it is not visible to a viewer.

### Brief Description of the Drawings

A complete understanding of the present invention may be gained by considering the following detailed description in conjunction with the accompanying drawing, in which:

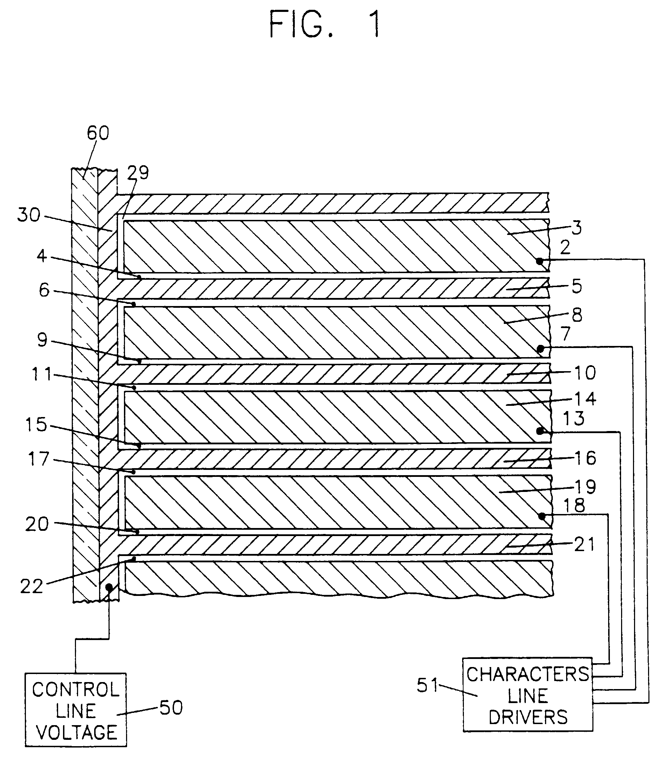

FIG. 1 shows, in pictorial form, a portion of a preferred embodiment of an anode electrode structure which is fabricated in accordance with the present invention for use in providing an electrophoretic display panel.

### Best Mode For Carrying Out The Invention

FIG. 1 shows a preferred embodiment of anode electrode structure 12 for use in fabricating an electrophoretic display panel. Electrophoretic display panels are well known in the art and detailed descriptions regarding their fabrication and operation can be found in the U.S. Patents identified above in the Background of the Invention plus many others. Thus, for purposes of clarity, the following detailed description will only show details of the anode electrode structure of the present invention. Further, for purposes of illustration, the electrophoretic display panel which is fabricated using an embodiment of the inventive anode electrode structure is adapted to display characters. Lastly, in accordance with the present invention, a line of displayed characters is formed utilizing a predetermined number of anode line segments wherein each anode line segment comprises a first and a second conductor.

FIG. 1 shows a portion of anode electrode structure 12 which is fabricated in accordance with the present invention and which forms at least a portion of a line of displayed text in the display. Typically, each anode line is fabricated from a thin layer of ITO deposited on a glass sheet. The ITO layers are practically transparent and fabricated on the glass sheet by conventional processing techniques as described in the above-noted patents. The ITO lines are deposited on a glass sheet 60. In a typical electrophoretic display panel which is fabricated in accordance with the present invention, a line of displayed text is comprised of 26 anode line segments. As shown in FIG. 1, anode electrode structure 12 is comprised of a multiplicity of anode line segments, however, only segments 2, 7, 13, and 18 are shown for the sake of clarity. In accordance with the illustrative embodiment of the present invention, each of anode line segments 2, 7, 13, and 18 is comprised of two, spaced apart conductors. In particular, anode line segment 2 is comprised of larger conductor strip 3 and smaller conductor strip 5; anode line segment 7 is comprised of a larger conductor strip 8 and smaller conductor strip 10; anode line segment 13 is comprised of larger conductor strip 14 and smaller conductor strip 16; and anode line segment 18 is comprised of larger conductor strip 19 and smaller conductor strip 21.

In a preferred embodiment of the present invention, larger conductor strips 3, 8, 14, and 19 are each .115" wide and smaller conductor strips 5, 10, 16, and 21 are each .013" wide. Further, the spaces between the conductors --spaces 4, 6, 9, 11, 15, 17, 20, and 22-- are each .001" wide. As a result of this, each anode line segment in the preferred embodiment is .130" wide.

It should be appreciated that embodiments of the present invention are not limited to an anode electrode structure having the dimensions given above. For example, one may fabricate an anode electrode structure wherein larger conductor strips 3, 8, 14, and 19 are each .110" wide; smaller conductor strips 5, 10, 16, and 21 are each .016" wide; and the spaces between the conductors --spaces 4, 6, 9, 11, 15, 17, 20, and 22-- are each .002" wide. In such an embodiment, each anode line segment is .130" wide.

It should further be appreciated that embodiments of the present invention are not limited to an anode electrode structure having uniform dimensions. As such, an embodiment of the present invention may be fabricated so that anode line segments associated with respective lines of displayed text have dimensions first given above as well as anode line segments having dimensions second given above.

As shown in FIG. 1, smaller conductor strips 5,'10, 16, and 21 are all electrically connected. Such connections would apply for all anode line segments associated with a given display line of said display and there would typically be no such connection between similarly situated conductor strips of different lines. Of course, it should be appreciated that the present invention does not require such electrical connection because appropriate voltages, as will be set forth in detail below, may be applied independently to these conductor strips. However, for a panel which is utilized in a character display mode, the electrical connection shown in FIG. 1 is preferred. In the preferred embodiment shown in FIG. 1, space 29 between one end of larger conductor strip 3 and conductor 30 is .0625" and conductor 30 is .0625" wide.

Table 1 helps illustrate the manner in which voltages are applied to anode electrode structure 12 for use in conjunction with an electrophoretic display panel to provide full panel erase, "hold", "write", and selective erase operations in accordance with the present invention. A full panel erase operation is provided by applying a negative voltage to all anode line segments 2, 7, 13, and 18, i.e., by applying a negative voltage to larger conductive strips 3, 8, 14, and 19 and by applying a negative voltage to smaller conductor strips 5, 10, 16, and 21. Further, a "hold" or a "write" operation is provided by applying a positive voltage to all anode line segments 2, 7, 13, and 18, i.e., by applying a positive voltage to larger conductive strips 3, 8, 14, and 19 and by applying a positive voltage to smaller conductor strips 5, 10, 16, and 21. Lastly, a selective erase operation of a line of text is achieved by applying a negative voltage to all of the anode line segments associated with that character line and by applying a positive voltage to all the anode line segments associated with the other lines of text.

**TABLE I**

| Operation | Voltages for Larger Conductor Strips | Voltages for Smaller Conductor Strips |
|---|---|---|
| Full Panel Erase | -V | -V |
| Hold | +V | +V |
| Write | +V | +V |
| Selective Erasure of a line of text | -V for those associated with erased text lines to be | +V |
| | +V for those associated with other text lines | |

The respective voltages discussed above are supplied to the smaller conductor strips as 5, 10, and so on by a conventional voltage generator 50 and to the groups of larger conductor strips associated with corresponding lines of displayed text by an anode line driver circuit 51. With reference to Table I, however, it will be observed that the respective groups of larger conductor strips need not be connected together, and hence, the larger strips associated with lines of displayed text above and below a given line of text being erased can be energized independently of the those corresponding to the given line. Accordingly, where anode line segment 7 is the lowermost segment of a first line of displayed text and anode line segment 13 is the uppermost line segment of the adjacent line of displayed text beneath the first, one could selectively erase the line of text by applying a negative voltage to the large conductor strips as strip 8 associated therewith and a positive voltage to the smaller conductor strips as 10 associated therewith, which smaller conductor strips are connected together. Lines of text which are not to be erased, as the adjacent one associated with large strip conductor 14 and small strip conductor 16, would be held by applying a positive voltage to all strip conductors associated therewith.

Those skilled in the art will recognize that further embodiments of the present invention may be made without departing from its teachings and that the present invention is not limited to the specific embodiments described above.

## Claims

1. An electrophoretic display, comprising:
a fluid-tight housing having a portion thereof which is at least partially transparent;
an electrophoretic fluid contained within said housing, said fluid having pigment particles suspended therein;
cathode and grid electrode conductors passing through said housing and said fluid;
an anode electrode (12) located within said housing, said anode electrode (12) having a plurality of parallel anode conductors arranged in a multiplicity of groups (2,7,13,18) of at least two conductors, one (3,8,14,19) of the at least two conductors of each group of conductors having a substantially greater cross-sectional area than another (5,10,16,21) of each group of conductors; and
a plurality of conductive control lines, each control line being positioned between a corresponding pair of character lines, defined by a predetermined number of said anode conductors, but having a lesser width, wherein at least one of said character lines is adapted to receive a different operating potential than said control lines during at least one operating mode of said display.

2. The display of Claim 1, wherein the conductor (3,8,14,19) of each group having said substantially greater cross-sectional area has a larger width than said another (5,10,16,21)conductor of each group.

3. The display of Claim 2, wherein each group (2,7,13,18) of conductors comprises a plurality of larger width conductors (3,8,14,19) and each group is associated with a corresponding character line of said display.

4. The display of Claim 3, wherein each group (2,7,13,18) further includes a smaller width conductor (5,10,16,21) disposed between larger width conductors (3,8,14,19) of adjacent groups.

5. The display of Claim 4, wherein each group (2,7,13,18) further includes a smaller width conductor (5,10,16,21) disposed between each adjacent pair of larger width conductors (3,8,14,19) thereof.

6. The display of Claim 2, wherein the conductors (5,10,16,21) having a smaller width are electrically connected in a predetermined number of adjacent groups.

7. The electrophoretic display according to Claim 1, wherein each character line comprises a group of conductive strips and wherein each conductive strip is adapted to receive said different operating potential.

8. The electrophoretic display according to Claim 7, wherein it further includes control means (50,51) operative to simultaneously supply a given polarity voltage to said control lines and conductive strips associated with character lines not selected for erasure.

9. The electrophoretic display according to Claim 8, wherein said control means (50,51) are further operative to supply an opposite polarity voltage to conductive strips associated with a character line selected for erasure while supplying said given polarity voltage to said control lines and conductive strips of character lines not selected for erasure, whereby a selected character line can be erased without affecting character lines adjacent thereto.

10. The electrophoretic display according to Claim 8, further including control means operative to simultaneously supply a given polarity voltage to said control lines and to character lines not selected for erasure.

11. The electrophoretic display according to Claim 10, wherein said control means are further operative to supply an opposite polarity voltage to character lines selected for erasure while supplying said given polarity voltage to control lines and character lines not selected for erasure, whereby said selected character lines can be erased without affecting character lines adjacent thereto.

12. A method of selectively erasing a character line of an electrophoretic display having a plurality of character lines and a conductive control line beneath the character line selected for erasure, said character lines being defined by a predetermined number of anode conductors, comprising the steps of:
simultaneously applying in a first applying step a voltage of a given polarity to said control line and an erase voltage of an opposite polarity to said selected character line; and
applying in a second applying step a voltage of said given polarity to all other character lines not being erased.

13. The method according to Claim 12, wherein each character line comprises a group of parallel conductive strips, and wherein said erase voltage is applied to each conductive strip of said selected character line.

14. The method according to Claim 13, wherein one of said control lines is disposed between said selected character line and at least one adjacent character line, said given voltage being applied to said control line and to conductive strips of said adjacent character line.

15. The method according to Claim 12, wherein said erase voltage is a negative voltage.

16. The method according to Claim 12, wherein said conductive control line has a significantly smaller cross-sectional area than said conductive strips.

17. The method according to Claim 12, wherein said control line is of the same length as said character line.

18. The method according to Claim 12, wherein said control line is a smaller width than said character line.

19. The method according to Claim 12, further including the steps of providing another conductive control line above said selected character line; and
applying said voltage of said given polarity to said another conductive line during said first applying step.

## Patentansprüche

1. Eine elektrophoretische Anzeigevorrichtung, mit:
einem flüssigkeitsdichten Gehäuse, das einen Abschnitt aufweist, der wenigstens teilweise transparent ist;
einer in dem Gehäuse enthaltenen elektrophoretischen Flüssigkeit, wobei die Flüssigkeit darin suspendierte Pigmentpartikel aufweist;
Kathoden- und Gitterelektrodenleitern, die durch das Gehäuse und die Flüssigkeit laufen;
einer Anodenelektrode (12), die sich in dem Gehäuse befindet, wobei die Anodenelektrode (12) mehrere parallele Anodenleiter aufweist, die in einer Vielzahl von Gruppen (2, 7, 13, 18) mit wenigstens zwei Leitern angeordnet sind, wobei einer (3, 8, 14, 19) der wenigstens zwei Leiter jeder Gruppe von Leitern ein im wesentlichen größeres Querschnittsgebiet als ein anderer (5, 10, 16, 21) jeder Gruppe von Leitern aufweist; und
mehreren leitfähigen Steuerzeilen, wobei jede Steuerzeile zwischen einem entsprechenden Paar von Buchstabenzeilen, die von einer vorab bestimmten Anzahl der Anodenleiter definiert werden, positioniert ist, aber eine geringere Breite aufweist, worin wenigstens eine der Buchstabenzeilen gestaltet ist, um ein anderes Betriebspotential als die Steuerzeilen während wenigstens eines Betriebsmodus der Anzeigevorrichtung zu empfangen.

2. Die Anzeigevorrichtung von Anspruch 1, worin der Leiter (3, 8, 14, 19) jeder Gruppe mit dem im wesentlichen größeren Querschnittsgebiet eine größere Breite als der andere (5, 10, 16, 21) Leiter jeder Gruppe aufweist.

3. Die Anzeigevorrichtung von Anspruch 2, worin jede Gruppe (2, 7, 13, 18) von Leitern mehrere Leiter (3, 8, 14, 19) mit größerer Breite umfaßt und jede Gruppe mit einer entsprechenden Buchstabenzeile der Anzeigevorrichtung verbunden ist.

4. Die Anzeigevorrichtung von Anspruch 3, worin jede Gruppe (2, 7, 13, 18) außerdem einen Leiter (5, 10, 16, 21) mit kleinerer Breite einschließt, der zwischen Leitern (3, 8, 14, 19) mit größerer Breite von benachbarten Gruppen angeordnet ist.

5. Die Anzeigevorrichtung von Anspruch 4, worin die Gruppe (2, 7, 13, 18) außerdem einen Leiter (5, 10, 16, 21) mit kleinerer Breite einschließt, der zwischen jedem benachbarten Paar von Leitern (3, 8, 14, 19) mit größerer Breite angeordnet ist.

6. Die Anzeigevorrichtung von Anspruch 2, worin die Leiter (5, 10, 16, 21) mit einer kleineren Breite in einer vorab bestimmten Anzahl von benachbarten Gruppen elektrisch verbunden sind.

7. Die elektrophoretische Anzeigevorrichtung nach Anspruch 1, worin jede Buchstabenzeile eine Gruppe von leitfähigen Streifen umfaßt und worin jeder leitfähige Streifen gestaltet ist, um das andere Betriebspotential zu empfangen.

8. Die elektrophoretische Anzeigevorrichtung nach Anspruch 7, worin sie außerdem Steuereinrichtungen (50, 51) zum simultanen Speisen der Steuerzeilen und leitfähigen Streifen, die mit Buchstabenzeilen verbunden sind, die nicht zum Löschen ausgewählt sind, mit einer Spannung mit einer bestimmten Polarität einschließt.

9. Die elektrophoretische Anzeigevorrichtung nach Anspruch 8, worin die Steuereinrichtungen (50, 51) außerdem zum Speisen der leitfähigen Streifen, die mit einer Buchstabenzeile verbunden sind, die zum Löschen ausgewählt ist, mit einer Spannung mit entgegengesetzter Polarität, während sie die Steuerzeilen und leitfähigen Streifen von Buchstabenzeilen, die nicht zum Löschen ausgewählt sind, mit der Spannung mit der bestimmten Polarität speisen, brauchbar sind, wodurch eine ausgewählte Buchstabenzeile gelöscht werden kann, ohne dazu benachbarte Buchstabenzeilen zu beeinflussen.

10. Die elektrophoretische Anzeigevorrichtung nach Anspruch 8, die außerdem Steuereinrichtungen zum simultanen Speisen der Steuerzeilen und Buchstabenzeilen, die nicht zum Löschen ausgewählt sind, mit einer Spannung mit einer bestimmten Polarität einschließt.

11. Die elektrophoretische Anzeigevorrichtung nach Anspruch 10, worin die Steuereinrichtungen außerdem zum Löschen von Buchstabenzeilen, die zum Löschen ausgewählt sind, mit einer Spannung mit entgegengesetzter Polarität, während sie die Steuerzeilen und Buchstabenzeilen, die nicht zum Löschen ausgewählt sind, mit der Spannung mit der bestimmten Polarität speisen, brauchbar sind, wodurch die ausgewählten Buchstabenzeilen gelöscht werden können, ohne dazu benachbarte Buchstabenzeilen zu beeinflussen.

12. Ein Verfahren zum wahlweisen Löschen einer Buchstabenzeile einer elektrophoretischen Anzeigevorrichtung mit mehreren Buchstabenzeilen und einer leitfähigen Steuerzeile unter der zum Löschen ausgewählten Buchstabenzeile, wobei die Buchstabenzeilen durch eine vorab bestimmte Anzahl von Anodenleitern definiert sind, das die Schritte umfaßt:
in einem ersten Anlegeschritt simultanes Anlegen einer Spannung mit einer bestimmten Polarität an die Steuerzeile und einer Löschspannung mit entgegengesetzter Polarität an die ausgewählte Buchstabenzeile; und
in einem zweiten Anlegeschritt Anlegen einer Spannung mit der bestimmten Polarität an allen anderen nicht zu löschenden Buchstabenzeilen.

13. Das Verfahren nach Anspruch 12, worin jede Buchstabenzeile eine Gruppe von parallelen leitfähigen Streifen umfaßt, und worin die Löschspannung an jedem leitfähigen Streifen der ausgewählten Buchstabenzeile anliegt.

14. Das Verfahren nach Anspruch 13, worin eine der Steuerzeilen zwischen der ausgewählten Buchstabenzeile und wenigstens einer benachbarten Buchstabenzeile angeordnet ist, wobei die bestimmte Spannung an die Steuerzeile und leitfähigen Streifen der benachbarten Buchstabenzeile angelegt ist.

15. Das Verfahren nach Anspruch 12, worin die Löschspannung eine negative Spannung ist.

16. Das Verfahren nach Anspruch 12, worin die leitfähige Steuerzeile ein wesentlich kleineres Querschnittsgebiet als die leitfähigen Streifen aufweist.

17. Das Verfahren nach Anspruch 12, worin die Steuerzeile dieselbe Länge wie die Buchstabenzeile aufweist.

18. Das Verfahren nach Anspruch 12, worin die Steuerzeile eine kleinere Breite als die Buchstabenzeile aufweist.

19. Das Verfahren nach Anspruch 12, das außerdem die Schritte des Bereitstellens einer weiteren leitfähigen Steuerzeile über der ausgewählten Buchstabenzeile und Anlegens der Spannung mit der bestimmten Polarität an die weitere leitfähige Zeile während des ersten Anlegeschrittes einschließt.

## Revendications

1. Un dispositif d'affichage électrophorétique, comprenant :
une enceinte étanche ayant une portion de celle-ci qui est au moins partiellement transparente;
un fluide électrophorétique contenu dans ladite enceinte, ledit fluide ayant des particules de pigment suspendues dans celui-ci;
des conducteurs d'électrodes de cathode et de grille traversant ladite enceinte et ledit fluide;
une électrode d'anode (12) située dans ladite enceinte, ladite électrode d'anode (12) ayant une pluralité de conducteurs d'anode parallèles agencés en une multiplicité de groupes (2,7,13,18) d'au moins deux conducteurs, l'un (3,8,14,19) d'au moins deux conducteurs de chaque groupe de conducteurs ayant une surface de section transversale sensiblement plus grande qu'un autre (5,10,16,21) de chaque groupe de conducteurs; et
une pluralité de lignes de commande conductrices, chaque ligne de commande étant positionnée entre une paire correspondante de lignes de caractères, définies par un nombre prédéterminé desdits conducteurs d'anode, mais ayant une largeur plus petite, dans lequel au moins l'une desdites lignes de caractères est propre à recevoir un potentiel de fonctionnement différent que lesdites lignes de commande pendant au moins un mode de fonctionnement dudit dispositif d'affichage.

2. Le dispositif d'affichage de la Revendication 1, dans lequel le conducteur (3,8,14,19) de chaque groupe ayant ladite surface de section transversale sensiblement plus grande a une largeur plus grande que ledit autre (5,10,16,21) conducteur de chaque groupe.

3. Le dispositif d'affichage de la Revendication 2, dans lequel chaque groupe (2,7,13,18) des conducteurs comprend une pluralité de conducteurs de largeur plus grande (3,8,14,19) et chaque groupe est associé à une ligne de caractères correspondante dudit dispositif d'affichage.

4. Le dispositif d'affichage de la Revendication 3, dans lequel chaque groupe (2,7,13,18) inclut en outre un conducteur de plus petite largeur (5,10,16,21) disposé entre des conducteurs de largeur plus grande (3,8,14,19) de groupes adjacents.

5. Le dispositif d'affichage de la Revendication 4, dans lequel chaque groupe (2,7,13,18) inclut en outre un conducteur de plus petite largeur (5,10,16,21) disposé entre chaque paire adjacente de conducteurs de plus grande largeur (3,8,14,19) de celui-ci.

6. Le dispositif d'affichage de la Revendication 2, dans lequel les conducteurs (5,10,16,21) ayant une plus petite largeur sont connectés électriquement en un nombre prédéterminé de groupes adjacents.

7. Le dispositif électrophorétique conforme à la Revendication 1, dans lequel chaque ligne de caractères comprend un groupe de bandes conductrices et dans lequel chaque bande conductrice est propre à recevoir ledit potentiel de fonctionnement différent.

8. Le dispositif électrophorétique conforme à la Revendication 7, dans lequel il inclut en outre des moyens de commande (50,51) fonctionnant pour fournir simultanément une tension de polarité donnée auxdites lignes de commande et auxdites bandes conductrices associées à des lignes de caractères non sélectionnées pour effacement.

9. Le dispositif électrophorétique conforme à la Revendication 8, dans lequel lesdits moyens de commande (50,51) fonctionnent en outre pour fournir une tension de polarité opposée à des bandes conductrices associées à une ligne de caractères sélectionnée pour effacement tout en fournissant ladite tension de polarité donnée auxdites lignes de commande et auxdites bandes conductrices de lignes de caractères non sélectionnées pour effacement, afin qu'une ligne de caractères sélectionnée puisse être effacée sans affecter des lignes de caractères adjacentes à celle-ci.

10. Le dispositif électrophorétique conforme à la Revendication 8, incluant en outre des moyens de commande fonctionnant pour fournir simultanément une tension de polarité donnée auxdites lignes de commande et à des lignes de caractères non sélectionnées pour effacement.

11. Le dispositif électrophorétique conforme à la Revendication 10, dans lequel lesdits moyens de commande fonctionnent en outre pour fournir une tension de polarité opposée à des lignes de caractères sélectionnées pour effacement tout en fournissant ladite tension de polarité donnée à des lignes de commande et des lignes de caractères non sélectionnées pour effacement, afin que lesdites lignes de caractères sélectionnées puissent être effacées sans affecter des lignes de caractères adjacentes à celles-ci.

12. Un procédé pour effacer sélectivement une ligne de caractères d'un dispositif d'affichage électrophorétique ayant une pluralité de lignes de caractères et une ligne de commande conductrice au-dessous de la ligne de caractères sélectionnée pour effacement, lesdites lignes de caractères étant définies par un nombre prédéterminé de conducteurs d'anode, comprenant les étapes de :
appliquer simultanément à une première étape d'application une tension d'une pluralité donnée à ladite ligne de commande et une tension d'effacement d'une polarité opposée à ladite ligne de caractères sélectionnée; et
appliquer à une seconde étape d'application une tension de ladite polarité donnée à toutes les autres lignes de caractères non effacées.

13. Le procédé conforme à la Revendication 12, selon lequel chaque ligne de caractères comprend un groupe de bandes conductrices parallèles, et selon lequel ladite tension d'effacement est appliquée à chaque bande conductrice de ladite ligne de caractères sélectionnée.

14. Le procédé conforme à la Revendication 13, selon lequel l'une desdites lignes de commande est disposée entre ladite ligne de caractères sélectionnée et au moins une ligne de caractères adjacente, ladite tension donnée étant appliquée à ladite ligne de commande et à des bandes conductrices de ladite ligne de caractères adjacente.

15. Le procédé conforme à la Revendication 12, selon lequel ladite tension d'effacement est une tension négative.

16. Le procédé conforme à la Revendication 12, selon lequel ladite ligne de commande conductrice a une surface de section transversale plus petite de manière significative que lesdites bandes conductrices.

17. Le procédé conforme à la Revendication 12, selon lequel ladite ligne de commande est de même longueur que ladite ligne de caractères.

18. Le procédé conforme à la Revendication 12, selon lequel ladite ligne de commande est d'une largeur plus petite que ladite ligne de caractères.

19. Le procédé conforme à la Revendication 12, incluant en outre l'étape de fournir une autre ligne de commande conductrice au-dessus de ladite ligne de caractères sélectionnée ; et
appliquer ladite tension de ladite polarité donnée à ladite autre ligne conductrice pendant ladite première étape d'application.
